(19) Europäisches Patentamt
European Patent Office
Office européen des brevets

(11) Publication number: 0 133 718
B1

(12) # EUROPEAN PATENT SPECIFICATION

(45) Date of publication of patent specification: 12.10.88

(51) Int. Cl.⁴: B 01 J 39/08, B 01 J 39/12

(21) Application number: 84201083.7

(22) Date of filing: 23.07.84

(54) ## Inorganic cation exchangers and the process for their preparation.

(30) Priority: 01.08.83 IT 2236583

(43) Date of publication of application:
06.03.85 Bulletin 85/10

(45) Publication of the grant of the patent:
12.10.88 Bulletin 88/41

(84) Designated Contracting States:
AT BE CH DE FR GB LI LU NL SE

(56) References cited:
US-A-4 180 551
US-A-4 609 484

GAZZETTA CHIMICA ITALIANA, vol. 113, 1983, pages 547-552, Societa Chimica Italiana, IT; G. ALBERTI et al.: "Synthesis and preliminary characterisation of ion-exchange and intercalation behaviour of zirconium phosphate phosphite with layered structure of alpha-type"

(73) Proprietor: ENI-Ente Nazionale Idrocarburi
P.le E.Mattei 1
I-00144 Roma (IT)

(72) Inventor: Alberti, Giulio
Via Ruggero Torelli 67
I-06100 Perugia (IT)
Inventor: Bartoli, Francesco
Via Jachino 63
I-00144 Rome (IT)
Inventor: Costantino, Umberto
Via Cortonese 3A
I-06100 Perugia (IT)
Inventor: Di Gregorio, Francesco
Via Tanaro 19
I-00015 Monterotondo Rome (IT)

(74) Representative: Roggero, Sergio et al
Ing. Barzanò & Zanardo Milano S.p.A. Via Borgonuovo 10
I-20121 Milano (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

This invention relates to inorganic cation exchangers.

More particularly, the invention relates to inorganic cation exchangers constituted by phosphates or arsenates of tetravalent metals in which part of the phosphate or arsenate groups is substituted by phosphite groups.

The acid phosphates and arsenates of the tetravalent metals, of general formula $M(HYO_4)_2 \cdot nH_2O$ (Y=P, As; M=Zr, Ti, Hf, Ge, Sn, Ce, Th) have been obtained not only as amorphous materials but also as semicrystalline and crystalline materials, both with a fibrous structure and with an α and γ stratified structure.

These materials, and in particular zirconium acid phosphate, have been and are still the subject of intense research in various national and foreign laboratories because of their stability towards acids and/or oxidising agents, their high resistance both to temperature and to ionising radiation, and their potential application in the field of ion exchange, heterogeneous catalysis, intercalation of molecules with proton acceptor groups, solid electrolytes and chromatograph supports.

A compendium of the enormous amount of experimental work carried out up to the present time can be found in certain magazines (see for example G. Alberti in Account of Chemical Research, 11, 163, 1978) and in some recent monographs in scientific texts [see for example the first three chapters of "Inorganic Ion Exchange Materials" by A. Clearfield, G. Alberti and U. Costantino respectively (Editor Clearfield) CRC Press USA 1982, and Chapter V by G. Alberti and U. Costantino in "Intercalation Chemistry" (Editors Whittingham and Jacobson), Academic Press, USA, (1982)].

Zr-acid phosphate, alpha-$Zr(HPO_4)_2 \cdot H_2O$, has a layered structure, the interlayer gap being 0,756 nm. Each layer is a plane of Zr-atoms sandwiched between two layers of $O_3P$—OH tetrahedron groups, and the structure is such that each Zr-atom is octahedrally coordinated with 6 oxygens of 6 different $O_3P$—OH groups. The distance between any two $O_3P$—OH groups on the same face of a layer is 0,53 nm, so that the free area connected with each such group is about 0,24 $nm^2$. The layers are so packed that, in the interlayer region, zeolite-type cavities are formed, interconnected by windows having 0,264 nm max. diameter. Ion-exchange processes for ions larger than such size, or intercalation processes for large cross-sectional-area molecules are impossible, or, at the most, the intercalation kinetics are too low.

A prior art attempt to remedy has been replacing 50% of the protons by Na-ions, to give monosodium pentahydrate $ZrHPO_4 \cdot NaPO_4 \cdot H_2O$, having an interlayer distance of 0,116 nm. The Na-ion is then replaced by larger ions.

Another prior art attempt to solve the problems aforementioned is disclosed in US—A—4 180 551, describing inorganic ion exchangers on the basis of Zr-phosphates which may contain statistically distributed pyrophosphate groups.

We have now surprisingly found that the drawbacks of the prior art ion exchangers can be overcome by an inorganic cation exchanger wherein a part of the phosphate (or arsenate) groups is replaced by phosphite groups, the result being a solid solution containing both phosphate (or arsenate) ions together with phosphite ions, whereby the free area connected to each phosphate (or arsenate) group grows proportionally to the number of phosphite groups, while, concurrently, the steric hindrances to the diffusion of large ions or molecules in the interlayer space are reduced.

The present invention, therefore, provides a cation exchanger comprising a solid solution of a tetravalent metal acid salt of at least two oxygenated acids, of tetrahedron structure, of the elements phosphorus and/or arsenic, said cation exchanger further corresponding to the formula:

$$M(HAO_4)_{2-x} \cdot nH_2O$$

where M is a tetravalent metal selected from Zr, Ti or Hf; A is phosphorus or arsenic; x is between 0,05 and 1,96; and n is a whole number or a fraction between 0 and 6. Preferred pairs of acids according to the invention are phosphoric acid-phosphorus acid and arsenic acid-phosphorus acid.

The cation exchanger according to the invention can be amorphous, and in this case the values of x vary from 0,05 to 1,95 and n is a whole number or a fraction between 0 and 6, or, as an alternative, they can be semicrystalline, and, if so, the values of x and n are the same as for the amorphous material, but a layered structure is originated, wherein the interlayer distance is from 0,106 nm to 0,550 nm.

The preferred embodiment of the cation exchanger according to the invention, however, is crystalline, and it has surprisingly been found that not every composition in which x is from 0 to 2 can be prepared.

In this respect, with reference to the aforesaid preferred pairs, three different classes with different distances between layers have been determined, of general formula

$$M(HAO_4)_{2-x}(HPO_3)_x \cdot nH_2O$$

where A is As or P as heretofore, and M is Zr in particular.

In the first class x is between 0.05 and about 0.5 (distance between layers 0,76—0,72 nm), in the second class x is between 1.02 and about 1.50 (distance between layers 0,69—0,62 nm), and in the third class x is between about 1.80 and 1.95 (distance between layers 0,60—0,55 nm).

The value of n for the first class is between 0 and 1, for the second class is between 0 and 0.5, and for the third class is between 0 and 0.2. By way of example, a cation exchanger according to the invention corresponds to the general formula

$$Zr(HPO_4)_{0.66}(HPO_3)_{1.34} \cdot nH_2O$$

where n is between 0 and 0.3, the distance between layers being 0,655±0,005 nm.

The ion exchange capacity depends on the quantity of $O_3P$—OH or $O_3As$—OH groups present, and for the three classes of materials indicated heretofore this quantity is therefore 1.95—1.5, 0.98—0.50 and 0.2—0.05 equivalents per formula weight respectively. Ion exchange experiments with monovalent ions ($Li^+$, $Na^+$, $K^+$, $NH_4^+$, $Cs^+$, $Ag^+$ and $Tl^+$) and bivalent ions ($Mg^{2+}$, $Ca^{2+}$, $Ba^{2+}$ and $Cu^{2+}$) have shown that all the protons of the $O_3Y$—OH groups present in the compounds

$$Zr(HYO_4)_{2-x} \cdot (HPO_3)_x$$

can be easily exchanged, and some experiments with aliphatic monoamines have shown that each $O_3Y$—OH group is able to protonate an amino group with consequent intercalation of the monoamine in the interlayer region.

X-ray diffraction measurements using the powder method have shown that the diffraction maximum position corresponding to $d_{002}$ depends on the dimensions of the exchanged ions and the length of the intercalated molecules, so confirming that all the tetravalent metal phosphate-phosphites and arsenate-phosphites according to the present invention have a stratified structure if crystalline. The distances between layers given heretofore have therefore been deduced from the $d_{002}$ diffraction maximum position in the powder diffraction spectrum. By simultaneously determining the distance between layers and the material density and applying the formula

$$n = \frac{\rho d}{M},$$

where ρ is the density (g/cc), d is the distance between layers (in cm) and M is the formula weight, a value of n has been obtained for all the zirconium phosphate-phosphites examined which is very close to that of α-$Zr(HPO_4)_2 \cdot H_2O$ ($6.8 \times 10^{-10}$ moles $cm^{-2}$).

According to G. Alberti and colleages, J. Inorg. Nucl. Chem. *41*, 643, 1979, this means that the mixed zirconium acid salts according to the present invention have a stratified structure of type similar to that of

$$\alpha\text{-}Zr(HPO_4)_2 \cdot H_2O.$$

As an example, Figure 1 (A and B) shows diagrammatically the assumed structure for

$$Zr(HPO_4)_{0.66}(HPO_3)_{1.34}.$$

In Figure 1B, the large black circles indicate Zr, the shaded circles indicate P, the white circles indicate oxygen and the small black circles indicate hydrogen atoms.

In Figure 1A, the white circles represent the phosphite group and the shaded circles represent the phosphate group.

The distance 1 between the two layers is 0,655 nm; the distance 2 is 0,53 nm.

Figure 1A represents a plan view, whereas Figure 1B represents a side view.

The tetravalent metal phosphate-phosphites and arsenate-phosphites are thermally stable up to a relatively high temperature. For example the thermal behaviour of

$$Zr(HPO_4)_{1.7}(HPO_3)_{0.3} \cdot 0.2H_2O$$

is very similar to that of $Zr(HPO_4)_2 \cdot H_2O$.

The hydration water is completely lost at a temperature of less than 100°C, and pyrophosphate condensation takes place at a temperature exceeding 300°C.

Finally, in the presence of air the phosphites oxidise to phosphates at a temperature greater than 600°C, and thus at 1000°C the product is transformed completely into $ZrP_2O_7$ of cubic structure. The thermal behaviour of

$$Zr(HPO_4)_{0.66}(HPO_3)_{1.34}$$

is considerably different from that of zirconium phosphate in that the pyrophosphate is formed at a relatively lower temperature. Its thermal decomposition can be shown schematically as follows:

$$Zr(HPO_4)_{0.66}(HPO_3)_{1.34}0.14H_2O \xrightarrow[-0.14H_2O]{100°C} Zr(HPO_4)_{0.66}(HPO_3)_{1.34}$$

$$\xrightarrow[-0.33H_2O]{180°C—350°C} Zr(P_2O_7)_{0.33}(HPO_3)_{1.34} \xrightarrow[+0.67O_2—0.67H_2O]{600°C—1000°C} ZrP_2O_7$$

The present invention also contemplates a process for preparing a cation exchanger having the hereinbefore reported general formula, the definitions of M, A, x and n being the ones referred to above, said process comprising the step of reacting a compound of the tetravalent metal concerned with at least two oxygenated acids of phosphorus and arsenic. Preferably the reaction is carried out in an aqueous environment.

The compound of the tetravalent metal concerned is selected from the halide, oxyhalides, nitrates, sulphates, phosphates and oxides, and the acid pairs are as hereinbefore specified.

If two oxygenated acids are used, and in particular the aforesaid pairs, the total concentration of the oxygenated acids is between 0.5 and 14 M, and the ratio in solution of the total moles of acids to the moles of the tetravalent metal is at least 2.

The temperatures and reaction times are as follows: to obtain the amorphous product, the temperature is less than 50°C and the time less than 1 hour; to obtain the semicrystalline product, the temperature is between 50°C and the boiling point of the solution and the time is between 1 and 100 hours; to obtain the crystalline product the temperature can be chosen in accordance with the pressure between the following values: boiling point at atmospheric pressure, with a reaction time of between 100 and 1000 hours, or boiling point at 300°C in an autoclave for a time of between 10 and 100 hours.

It should be noted that the degree of crystallinity is higher the higher the total acid concentration, and increases as the reaction time increases.

The crystalline exchangers can also be obtained by boiling the amorphous phosphates or phosphites under reflux directly in mixtures of $H_3PO_4$ and $H_3PO_3$.

Again with reference to obtaining crystalline materials with the aforesaid pairs of acids and with a total acid concentration of between 0.5 M and 14 M and a ratio of total moles of acids to moles of tetravalent metal of at least 2, the reaction can be conducted in the presence of a complexing agent for the tetravalent metal, and in this case the temperature is between ambient temperature and the solution boiling point, with a time of between 1 and 100 hours.

Using this method, a complexing agent for the metal is added to a solution of a M (IV) salt, followed for example by a mixture of the acids $H_3PO_4$ and $H_3PO_3$.

Precipitation is then obtained by gradually removing the complexing agent. If this is volatile (such as HF) it can be left to evaporate in an open vessel at a temperature between ambient temperature and the solution boiling point, or can be removed by bubbling steam or an inert gas such as nitrogen into the solution.

It should be noted that the degree of crystallinity of the product is higher the slower the removal of the complexing agent. If the complexing agent is not volatile (for example oxalic acid) or if larger crystals are required, the M (IV) complex can be decomposed thermally by gradually heating the solution in a closed vessel from ambient temperature to about 100°C.

In order to obtain crystalline exchangers with a distance between layers of between 0,76 and 7,2 nm, the total concentration of the mixture of the phosphoric and phosphorus acids (or arsenic and phosphorus acids) is between 2 and 14 M, and preferably 8—12 M, the molar fraction of the phosphoric or arsenic acid being between 0.98 and 0.75.

To obtain crystalline exchangers with a distance between layers of between 0,69 and 0,62 nm the total concentration of the mixture of the two acids is between 2 and 14 M, and preferably 8—12 M, and the molar fraction of the phosphoric acid is between 0.83 and 0.65, and that of the arsenic acid is between 0.94 and 0.80.

To obtain crystalline exchangers with a distance between layers of between 0,60 and 0,55 nm, the total acid concentration is the same, and the molar fraction of the phosphoric or arsenic acid is between 0.70 and 0.1.

To obtain crystalline exchangers with the three aforesaid ranges of distance between layers, in the presence of a complexing agent, preferably HF, the total concentration of the mixture of the two acids is between 2 and 10 M, and preferably between 4 and 6 M, the molar fraction of the phosphoric or arsenic acid being as heretofore stated.

The complexing agent is used at an initial molar concentration of about 2—10 times that of the metal, and preferably 4—8 times. The details of the preparation, the ion exchange properties and intercalation properties of some of the compounds according to the present invention are described in the following examples, which in no case are to be taken as limitative of the invention itself.

Example 1

Preparation of zirconium phosphate-phosphite of composition $Zr(HPO_4)_{1.7}(HPO_3)_{0.3}$ and distance between layers of 0,75 nm.

50 ml of a solution containing 1.2 M $ZrOCl_2$ and 7.2 M HF are mixed with 450 ml of a solution containing 5 M $H_3PO_4$ and 0.78 M $H_3PO_3$. This solution is placed in an open plastics vessel and heated to about 80°C for 48 hours to allow decomposition of the zirconium fluorocomplexes. The solution volume is kept constant by adding distilled water. The precipitate obtained is separated by centrifuging or filtration, and washed with distilled water to about pH 4. The precipitate has the composition $Zr(HPO_4)_{1.7}(HPO_3)_{0.3}$.

The precipitate, allowed to condition over a saturated NaCl solution at ambient temperature (relative humidity 75%), has the composition

$$Zr(HPO_4)_{1.7}(HPO_3)_{0.3} \cdot 0.2H_2O.$$

The powder spectrum obtained by X-ray diffraction is given in Table 1.

Example 2

Preparation of crystalline zirconium phosphate-phosphite of stratified structure and composition $Zr(HPO_4)_{0.85}(HPO_3)_{1.15}$ and distance between layers of 0,67 nm.

50 ml of a solution containing 1.2 M $ZrOCl_2$ and 7.2 M HF are added to 450 ml of a solution containing 4.8 M $H_3PO_4$ and 1.2 M $H_3PO_3$.

The procedure of Example 1 is followed, allowing the precipitation to take place for four days.

On conditioning at 75% relative humidity, the product contains about 0.14 moles of water per formula weight, and has a distance between layers of 0,67 nm.

Example 3

Preparation of crystalline zirconium phosphate-phosphite of stratified structure and composition $Zr(HPO_4)_{0.66}(HPO_3)_{1.34}$ and distance between layers of 0,655 nm.

50 ml of a solution containing 1.2 M $ZrOCl_2$ and 7.2 M HF are added to 450 ml of a solution containing 4.4 M $H_3PO_4$ and 1.33 M $H_3PO_3$.

The procedure of Example 1 is followed. The X-ray powder diffraction spectrum for the product obtained is given in Table 1.

Example 4

Preparation of semicrystalline zirconium phosphate-phosphite of stratified structure and composition $Zr(HPO_4)_{0.1}(HPO_3)_{1.9}$ with distance between layers of 0,57 nm.

50 ml of a solution containing 1.2 M $ZrOCl_2$ and 7.2 M HF are added to 450 ml of a solution containing 2.5 M $H_3PO_4$ and 2.5 M $H_3PO_3$. The procedure of Example 2 is then followed.

Example 5

Preparation of zirconium phosphate-phosphite with a distance between layers of 0,69—0,65 nm by boiling under reflux.

250 ml of a suspension obtained by adding 25 ml of a 1.3 M solution of $ZrOCl_2$ to 225 ml of a solution containing 8.3 M $H_3PO_4$ and 3.7 M $H_3PO_3$ are placed in a flask fitted with a reflux condenser. The precipitate obtained is boiled for a time of between 1 and 7 days. After separation by centrifuging or filtration, the precipitate is washed with distilled water to about pH 4. The degree of crystallinity increases as the boiling time increases, and the distance between layers decreases continuously from 0,69 nm to about 0,66—0,65 nm.

Example 6

Preparation of zirconium phosphate-phosphite with a distance between layers of 0,65 nm using the hydrothermal method. This was obtained by the following procedure:

25 ml of a 1.3 M solution of $ZrOCl_2$ are mixed with 225 ml of a solution containing 3.6 M $H_3PO_4$ and 2 M $H_3PO_3$, and the mixture left in an autoclave for 2 days at 230°C.

Example 7

Preparation of zirconium arsenate-phosphite with a distance between layers of 0,64 nm from solution containing HF.

500 ml of a solution containing 0.13 M $ZrOCl_2$, 0.72 M hydrofluoric acid, 4.9 M arsenic acid and 0.3 M phosphorous acid are prepared.

The procedure of Example 1 is then followed.

The product, conditioned at 75% relative humidity, has a distance between layers of 0,64 nm.

Example 8

Titration curves for $Zr(HPO_4)_{0.66}(HPO_3)_{1.34}$ with hydroxides of certain monovalent metals in the presence of added salt.

0.5 g of $Zr(HPO_4)_{0.66}(HPO_3)_{1.34}$ are suspended under agitation in 100 ml of a 0.1 N solution of M(I)Cl [0.1 M $TlNO_3$ in the case of Tl(I)]. Titration was then carried out with 0.1 M M(I)OH using a Mettler automatic titrimeter.

The titration curves obtained with LiOH (curve 1), NaOH (curve 2), KOH (curve 3), CsOH (curve 4) and Tl (I) OH (curve 5) are shown in Figure 2.

The abscissa axis represents milliequivalents of hydroxide added per g of exchanger. The ordinate axis represents the pH.

Example 9

Titration curves for $Zr(HPO_4)_{0.66}(HPO_3)_{1.34}$ with hydroxides of certain bivalent metals in the presence of added salt. Titration is carried out with the automatic titrimeter as in Example 1. The titration curves in the presence of 0.05 M added salt for Mg (curve A), Ca (curve B) and Ba (curve C) ions are shown in Figure 3.

The abscissa axis represents milliequivalents of hydroxide added per gram of exchanger. The ordinate axis represents the pH.

Example 10

Preparation of $ZrCu_{0.3}(PO_4)_{0.66}(HPO_3)_{1.34}$

0.5 g of $Zr(HPO_4)_{0.66}(HPO_3)_{1.34}$ are suspended under agitation in 100 ml of a 0.1 M copper acetate solution.

After about 1 day of contact, the precipitate is separated from the solution and washed with distilled water.

The distance between layers of the sample (conditioned at 75% relative humidity) is 0,76 nm.

Example 11

Intercalation of some n-alkyl monoamines (ethylamine, n-propylamine, n-butylamine) in $Zr(HPO_4)_{0.66}(HPO_3)_{1.34}$.

0.5 g of $Zr(HPO_4)_{0.66}(HPO_3)_{1.34}$ are suspended under agitation in 50 ml of a 0.1 M solution of the hydrochloride of the n-alkylmonoamine to be intercalated. Titration is then carried out with 0.1 M solution of the same n-alkylamine using an automatic titrimeter.

On termination of titration the materials have the approximate composition

$$Zr(HPO_4)_{0.66}(HPO_3)_{1.34}0.6C_2H_5NH_2,$$

$$Zr(HPO_4)_{0.66}(HPO_3)_{1.34}0.62C_3H_7NH_2,$$

and

$$Zr(HPO_4)_{0.66}(HPO_3)_{1.34}0.65C_4H_9NH_2,$$

and the distance between layers is 0,108 nm, 0,116 nm and 0,134 nm, respectively.

Example 12

Intercalation of some n-alkanols (butanol, pentanol and octanol) in $Zr(HPO_4)_{0.66}(HPO_3)_{1.34}$.

0.5 g of $Zr(HPO_4)_{0.66}(HPO_3)_{1.34}$ are suspended in 50 ml of the pure alkanol and kept under agitation for 24 hours at ambient temperature.

The solid is then separated from the solution and the X-ray powder spectrum is then determined for the intercalates obtained.

The distance between layers for the intercalates with butanol, pentanol and octanol are 0,112 nm, 0,121 nm, and 0,138 nm, respectively.

TABLE 1

X-ray powder diffraction spectra obtained for zirconium phosphate-phosphite of composition $Zr(HPO_4)_{1.7}(HPO_3)_{0.3}$ (column a) and for zirconium phosphate-phosphite of composition $Zr(HPO_4)_{0.66}(HPO_3)_{1.34}$ (column b).

| (a) | | (b) | |
|---|---|---|---|
| d (nm) | I | d (nm) | I |
| 0,752 | vs | 1,31 | w |
| 0,480 | vw | 0,655 | s |
| 0,450 | w | 0,464 | w |
| 0,444 | vw | 0,433 | vw |
| 0,402 | vw | 0,421 | w |
| 0,377 | vw | 0,357 | vs |
| 0,356 | s | 0,337 | vw |
| 0,352 | m | 0,269 | w |
| 0,331 | vw | | |
| 0,321 | w | | |
| 0,317 | w | | |
| 0,265 | w | | |
| 0,263 | m | | |
| 0,262 | w | | |
| 0,250 | w | | |

d (nm)=distance between layers in nm; I=intensity.
v=very; s=strong; m=medium; w=weak.

**Claims for the Contracting States: BE, CH, DE, FR, GB, LI, LU, NL, SE**

1. A cation exchanger characterised by comprising a solid solution of tetravalent metal acid salt of at least two oxygenated acids, of tetrahedron structure, of the elements phosphorus and/or arsenic, said cation exchanger further corresponding to the formula

$$M(HAO_4)_{2-x}(HAO_3)_x \cdot nH_2O,$$

where M is a tetravalent metal selected from Zr, Ti or Hf; A is phosphorus or arsenic; x is between 0.05 and 1.95; and n is a whole number or fraction between 0 and 6.

2. A cation exchanger as claimed in claim 1, wherein the oxygenated acids of phosphorus and/or arsenic are only two in number.

3. A cation exchanger as claimed in claim 2, wherein the two oxygenated acids are chosen from the pairs: phosphoric acid-phosphorus acid; arsenic acid-phosphorus acid.

4. A cation exchanger as claimed in claim 1, characterised by being amorphous and corresponding to the general formula

$$M(HAO_4)_{2-x}(HPO_3)_x \cdot nH_2O,$$

where M is the tetravalent metal, A is phosphorus or arsenic, x is between 0.05 and 1.95, and n is a whole number or fraction between 0 and 6.

5. A cation exchanger as claimed in claim 1, characterised by being semicrystalline of stratified structure, and corresponding to the general formula

$$Zr(HAO_4)_{2-x}(HPO_3)_x \cdot nH_2O$$

where A is phosphorus or arsenic, x is between 0.05 and 1.95, and n is between 0 and 6, the distance between layers being between 1,06 nm and 0,55 nm.

6. A cation exchanger as claimed in claim 1, characterised by being crystalline with a stratified structure, and corresponding to the general formula

$$Zr(HAO_4)_{2-x}(HPO_3)_x \cdot nH_2O,$$

where A is phosphorus or arsenic, x is between 0.05 and 0.5, and n is between 0 and 1, the distance between layers being between 0,76 nm and 0,72 nm.

7. A cation exchanger as claimed in claim 1, characterised by being crystalline with a stratified structure 5 and corresponding to the general formula

$$Zr(HAO_4)_{2-x}(HPO_3)_x \cdot nH_2O,$$

where A is phosphorus or arsenic, x is between 1.02 and 1.50 and n is between 0 and 0.5, the distance between layers being between 0,69 nm and 0,62 nm.

8. A cation exchanger as claimed in claim 7, characterised by being crystalline with a stratified structure and corresponding to the formula

$$Zr(HPO_4)_{0.66}(HPO_3)_{1.34} \cdot nH_2O,$$

where n is between 0 and 0.3, the distance between layers being 0,655 nm±0,005 nm.

9. A cation exchanger as claimed in claim 1, characterised by being semicrystalline with a stratified structure and corresponding to the general formula

$$Zr(HAO_4)_{2-x}(HPO_3)_x \cdot nH_2O,$$

where A is phosphorus or arsenic, x is between 1.80 and 1.95 and n is between 0 and 0.2, the distance between layers being between 0,60 nm and 0,55 nm.

10. A process for preparing a cation exchanger having the formula

$$M(HAO_4)_{2-x}(HAO_3)_x \cdot nH_2O,$$

where M is a tetravalent metal selected from Zr, Ti or Hf, A is phosphorus or arsenic, x is between 0.05 and 1.95, and n is a whole number or fraction between 0 and 6, characterised by comprising the steps of reacting a compound of a tetravalent metal with at least two oxygenated acids of phosphorus and/or arsenic.

11. A process as claimed in claim 10, wherein said reaction is carried out in an aqueous environment.

12. A process as claimed in claim 11, wherein the tetravalent metal compound is chosen from halides, oxyhalides, nitrates, sulphates, phosphates and oxides.

13. A process for preparing a cation exchanger as claimed in claim 12, wherein only two oxygenated acids are used.

14. A process as claimed in claim 13, wherein the two oxygenated acids are chosen from the pairs: phosphoric acid-phosphorus acid and arsenic acid-phosphorus acid.

15. A process as claimed in claim 14, wherein the concentration of the two oxygenated acids is between 0.5 and 14 M, and the ratio of the total moles of acid to the moles of tetravalent metal in the solution is at least 2.

16. A process as claimed in claim 15, wherein the reaction between the tetravalent metal compound and the pair of acids is conducted at a temperature of less than 50°C.

17. A process as claimed in claim 15, wherein the reaction is conducted at a temperature of between 50°C. and the solution boiling point for a time of between 1 and 100 hours.

18. A process as claimed in claim 15, wherein the reaction is conducted at the solution boiling point under atmospheric pressure for a time of between 100 and 1000 hours, or in an autoclave at a temperature between the boiling point and 300°C for a time of between 10 and 100 hours.

19. A process as claimed in claim 15, wherein the reaction is conducted at a temperature between ambient temperature and the solution boiling point for a time of between 1 and 100 hours in the presence of a complexing agent for the tetravalent metal.

20. A process as claimed in claim 19, wherein the complexing agent is hydrofluoric acid.

21. A process for preparing a cation exchanger as claimed in claim 18, wherein the total concentration of the mixture of the phosphoric and phosphorus acids or arsenic and phosphorus acids is between 2 and 14 M, the molar fraction of the phosphoric or arsenic acid being between 0.98 and 0.75.

22. A process for preparing a cation exchanger as claimed in claim 21, wherein the reaction is conducted in the presence of hydrofluoric acid having an initial molar concentration of approximately

2—10 times preferably 4—8 times that of the zirconium, the total concentration of the mixture of the two acids being between 2 and 10 M preferably between 4 and 6 M, and the temperature being between ambient temperature and about 100°C.

23. A process for preparing a cation exchanger as claimed in claim 15, wherein the total concentration of the mixture of the phosphoric and phosphorus acids or arsenic and phosphorus acids is between 2 and 14 M, the molar fraction of the phosphoric acid being between 0.83 and 0.65, and the molar fraction of the arsenic acid being between 0.94 and 0.80.

24. A process for preparing a cation exchanger as claimed in claim 23, wherein the reaction is conducted in the presence of hydrofluoric acid having an initial molar concentration of 2—10 times preferably 4—8 times that of the tetravalent metal, the total concentration of the mixture of the two acids being between 2 and 10 M preferably between 4 and 6 M, being between ambient temperature and about 100°C.

25. A process for preparing a cation exchanger as claimed in claim 15, wherein the total concentration of the mixture of phosphoric and phosphorus acids or arsenic and phosphorus acids is between 2 and 14 M, the molar fraction of the phosphoric or arsenic acid being between 0.70 and 0.1.

26. A process for preparing a cation exchanger as claimed in claim 25, wherein the reaction is conducted in the presence of hydrofluoric acid having an initial molar concentration of about 2—10 times preferably 4—8 times that of the tetravalent metal, the total concentration of the mixture of the two acids being between 2 and 10 M preferably between 4 and 6 M, and the temperature being between ambient temperature and about 100°C.

27. A method for intercalating polar molecules characterised by comprising the steps of suspending a cation exchanger of the formula

$$M(HAO_4)_{2-x}(HAO_3)_x \cdot nH_2O,$$

where M is a tetravalent metal selected from Zr, Ti or Hf, A is phosphorus or arsenic, x is between 0.05 and 1.95, and n is a whole number or fraction between 0 and 6, in a solution of polar molecules, and agitating such suspension until intercalates are formed.

28. Use of the products claimed in claims 1 to 9 as cation exchangers.

29. Use of the products claimed in claims 1 to 9 as intercalating agents for polar molecules.

30. Use according to claim 29 for intercalating polar molecules containing proton-acceptor groups.

**Claims for the Contracting State: AT**

1. A process for preparing a cation exchanger having the formula

$$M(HAO_4)_{2-x}(HAO_3)_x \cdot nH_2O,$$

where M is a tetravalent metal selected from Zr, Ti or Hf, A is phosphorus or arsenic, x is between 0.05 and 1.95, and n is a whole number or fraction between 0 and 6, characterised in that a compound of a tetravalent metal is reacted with at least two oxygenated acids of phosphorus and/or arsenic.

2. A process as claimed in claim 1, characterised in that said reaction is carried out in an aqueous environment.

3. A process as claimed in claim 2, characterised in that the tetravalent metal compound is chosen from halides, oxyhalides, nitrates, sulphates, phosphates and oxides.

4. A process for preparing a cation exchanger as claimed in claim 3, characterised in that only two oxygenated acids are used.

5. A process as claimed in claim 4, characterised in that the two oxygenated acids are chosen from the pairs: phosphoric acid-phosphorus acid and arsenic acid-phosphorus acid.

6. A process as claimed in claim 5, characterised in that the concentration of the two oxygenated acids is between 0.5 and 14 M, and the ratio of the total moles of acid to the moles of tetravalent metal in the solution is at least 2.

7. A process as claimed in claim 6, characterised in that the reaction between the tetravalent metal compound and the pair of acids is conducted at a temperature of less than 50°C.

8. A process as claimed in claim 6, characterised in that the reaction is conducted at a temperature of between 50°C. and the solution boiling point for a time of between 1 and 100 hours.

9. A process as claimed in claim 6, characterised in that the reaction is conducted at the solution boiling point under atmospheric pressure for a time of between 100 and 1000 hours, or in an autoclave at a temperature between the boiling point and 300°C. for a time of between 10 and 100 hours.

10. a process as claimed in claim 6, characterised in that the reaction is conducted at a temperature between ambient temperature and the solution boiling point for a time of between 1 and 100 hours in the presence of a complexing agent for the tetravalent metal.

11. A process as claimed in claim 10, characterised in that the complexing agent is hydrofluoric acid.

12. A process for preparing a cation exchanger as claimed in claim 9, characterised in that the total

concentration of the mixture of the phosphoric and phosphorus acids or arsenic and phosphorus acids is between 2 and 14 M, the molar fraction of the phosphoric or arsenic acid being between 0.98 and 0.75.

13. A process for preparing a cation exchanger as claimed in claim 12, characterised in that the reaction is conducted in the presence of hydrofluoric acid having an initial molar concentration of approximately 2—10 times preferably 4—8 times that of the zirconium, the total concentration of the mixture of the two acids being between 2 and 10 M preferably between 4 and 6 M, and the temperature being between ambient temperature and about 100°C.

14. A process for preparing a cation exchanger as claimed in claim 6, characterised in that the total concentration of the mixture of the phosphoric and phosphorus acids or arsenic and phosphorus acids is between 2 and 14 M, the molar fraction of the phosphoric acid being between 0.83 and 0.65, and the molar fraction of the arsenic acid being between 0.94 and 0.80.

15. A process for preparing a cation exchanger as claimed in claim 14, characterised in that the reaction is conducted in the presence of hydrofluoric acid having an initial molar concentration of 2—10 times preferably 4—8 times that of the tetravalent metal, the total concentration of the mixture of two acids being between 2 and 10 M preferably between 4 and 6 M, being between ambient temperature and about 100°C.

16. A process for preparing a cation exchanger as claimed in claim 6, characterised in that the total concentration of the mixture of phosphoric and phosphorus acids or arsenic and phosphorus acids is between 2 and 14 M, the molar fraction of the phosphoric or arsenic acid being between 0.70 and 0.1.

17. A process for preparing a cation exchanger as claimed in claim 16, characterised in that the reaction is conducted in the presence of hydrofluoric acid having an initial molar concentration of about 2—10 times preferably 4—8 times that of the tetravalent metal, the total concentration of the mixture of the two acids being between 2 and 10 M preferably between 4 and 6 M, and the temperature being between ambient temperature and about 100°C.

**Patentansprüche für die Vertragsländer: BE, CH, DE, FR, GB, LI, LU, SE**

1. Kationenaustauscher, dadurch gekennzeichnet, dass derselbe eine feste Lösung aus einem vierwertigen, saueren Metallsalz aus wenigstens zwei mit Sauerstoff behandelten Säuren mit Tetraedergefüge der Elemente Phosphor und/oder Arsen umfasst und ausserdem der Formel

$$M(HAO_4)_{2-x}(HAO_3)_x \cdot nH_2O$$

entspricht, wobei M ein vierwertiges, unter Zr, Ti oder Hf gewähltes Metall ist, A Phosphor oder Arsen ist, x zwischen 0,05 und 1,95 liegt und n eine ganze Zahl oder eine Bruhzahl zwischen 0 und 6 ist.

2. Kationenaustauscher nach Anspruch 1, bei dem die mit Sauerstoff behandelten Phosphor- und/oder Arsensäuren nur zwei an der Zahl sind.

3. Kationenaustauscher nach Anspruch 2, bei dem die mit Sauerstoff behandelten Säuren unter den Paaren Phosphorsäure/phosphorige Säure und Arsensäure/phosphorige Säure gewählt werden.

4. Kationenaustauscher nach Anspruch 1, dadurch gekennzeichnet, dass derselbe amorph ist und der allgemeinen Formel

$$M(HAO_4)_{2-x}(HPO_3)_x \cdot nH_2O$$

entspricht, wobei M ein vierwertiges Metall ist, A Phosphor oder Arsen ist, x zwischen 0,05 und 1,95 liegt und n eine ganze Zahl oder eine Bruchzahl zwischen 0 und 6 ist.

5. Kationenaustauscher nach Anspruch 1, dadurch gekennzeichnet, dass derselbe halbkristallin mit Schichtengefüge ist und der allgemeinen Formel

$$Zr(HAO_4)_{2-x}(HPO_3)_x \cdot nH_2O$$

entspricht, wobei A Phosphor oder Arsen ist, x zwischen 0,05 und 1,95 liegt und n zwischen 0 und 6 beträgt und der Abstand zwischen den Schichten zwischen 1,06 nm und 0,55 liegt.

6. Kationenaustauscher nach Anspruch 1, dadurch gekennzeichnet, dass derselbe kristallin mit Schichtengefüge ist und der allgemeinen Formel

$$Zr(HAO_4)_{2-x}(HPO_3)_x \cdot nH_2O$$

entspricht, wobei A Phosphor oder Arsen ist, x zwischen 0,05 und 0,5 liegt, n zwischen 0 und 1 beträgt und der Abstand zwischen den Schichten zwischen 0,76 nm und 0,72 nm liegt.

7. Kationenaustauscher nach Anspruch 1, dadurch gekennzeichnet, dass derselbe kristallin mit 5-Schichtengefüge ist und der allgemeinen Formel

$$Zr(HAO_4)_{2-x}(HPO_3)_x \cdot nH_2O$$

entspricht, wobei A Phosphor oder Arsen ist, x zwischen 1,02 und 1,50 liegt, n zwischen 0 und 0,5 beträgt und der Abstand zwischen den Schichten zwischen 0,69 nm und 0,62 nm liegt.

8. Kationenaustauscher nach Anspruch 7, dadurch gekennzeichnet, dass derselbe kristallin mit Schichtengefüge ist und der Formel

$$Zr(HPO_4)_{0,66}(HPO_3)_{1,34} \cdot nH_2O$$

entspricht, wobei n zwischen 0 und 0,3 beträgt und der Abstand zwischen den Schichten 0,655 nm±0,005 beträgt.

9. Kationenaustauscher nach Anspruch 1, dadurch gekennzeichnet, dass derselbe halbkristallin mit Schichtengefüge ist und der allgemeinen Formel

$$Zr(HAO_4)_{2-x}(HPO_3)_x \cdot nH_2O$$

entspricht, wobei A Phosphor oder Arsen ist, x zwischen 1,80 und 1,95 liegt, n zwischen 0 und 0,2 beträgt und der Abstand zwischen den Schichten zwischen 0,60 nm und 0,55 nm liegt.

10. Verfahren zur Herstellung eines Kationenaustauschers mit der Formel

$$M(HAO_4)_{2-x}(HAO_3)_x \cdot nH_2O,$$

wobei M ein unter Zr, Ti oder Hf gewältes, vierwertiges Metall ist, A Phosphor oder Arsen ist, x zwischen 0,05 und 1,95 liegt und n eine ganze Zahl oder eine Bruchzahl zwischen 0 und 6 ist, dadurch gekennzeichnet, dass es die Stufen der Reaktion einer Verbindung eines vierwertigen Metalls mit wenigstens zwei mit Sauerstoff behandelten Phosphor- und/oder Arsensäuren umfasst.

11. Verfahren nach Anspruch 10, bei dem die Reaktion in einer wässerigen Umgebung stattfindet.

12. Verfahren nach Anspruch 11, bei dem die vierwertige Metallverbindung unter Halogeniden, Oxyhalogeniden, Nitraten, Sulfaten, Phosphaten und Oxyden gewählt wird.

13. Verfahren zur Herstellung eines Kationenaustauschers nach Anspruch 12, bei dem nur zwei mit Sauerstoff behandelte Säuren benutzt werden.

14. Verfahren nach Anspruch 13, bei dem die beiden mit Sauerstoff behandelten Säuren unter den Paaren Phosphorsäure/phosphorige Säure und Arsensäure/phosphorige Säure gewählt werden.

15. Verfahren nach Anspruch 14, bei dem die Konzentration der beiden mit Sauerstoff behandelten Säuren zwischen 0,5 und 14M liegt und das Verhältnis der Gesamtsäuremole zu den Molen des vierwertigen Metalls in der Lösung wenigstens 2 beträgt.

16. Verfahren nach Anspruch 15, bei dem die Reaktion zwischen der vierwertigen Metallverbindung und dem Paar Säuren bei einer Temperatur von weniger als 50°C geführt wird.

17. Verfahren nach Anspruch 15, bei dem die Reaktion bei einer Temperatur zwischen 50°C und dem Siedepunkt der Lösung 1 bis 100 Stunden lang geführt wird.

18. Verfahren nach Anspruch 15, bei dem die Reaktion beim Siedepunkt der Lösung unter atmosphärischem Druck 100 bis 1000 Stunden lang oder in einem Autoklav bei einer Temperatur zwischen dem Siedepunkt und 300°C 10 bis 100 Stunden lang geführt wird.

19. Verfahren nach Anspruch 15, bei dem die Reaktion bei einer Temperatur zwischen der Raumtemperatur und dem Siedepunkt der Lösung 1 bis 100 Stunden lang in Anwesenheit eines Zusammensetzungsmittels für das vierwertige Metall geführt wird.

20. Verfahren nach Anspruch 19, bei dem das Zusammensetzungsmittel Fluorwasserstoffsäure ist.

21. Verfahren zur Herstellung eines Kationenaustauschers nach Anspruch 18, bei dem die Gesamtkonzentration des Gemisches der Phosphor- und phosphorigen oder der Arsen- und phosphorigen Säuren zwischen 2 und 14M liegt, wobei der Molenbruch der Phosphor- oder Arsensäure zwischen 0,98 und 0,75 liegt.

22. Verfahren zur Herstellung eines Kationenaustauschers nach Anspruch 21, bei dem die Reaktion in Anwesenheit einer Fluorwasserstoffsäure mit einer anfänglichen Molarität geführt wird, die annähernd das 2-10fache, vorzugsweise das 4-8fache derjenigen des Zirkons beträgt, wobei die Gesamtkonzentration des Gemisches der beiden Säuren zwischen 2 und 10M, vorzugsweise zwischen 4 und 6M, liegt und die Temperatur zwischen der Raumtemperatur und etwa 100°C liegt.

23. Verfahren zur Herstellung eines Kationenaustauschers nach Anspruch 15, bei dem die Gesamtkonzentration des Gemisches der Phosphor- und phosphorigen oder der Arsen- und phosphorigen Säuren zwischen 2 und 14M liegt, wobei der Molenbruch der Phosphorsäure zwischen 0,83 und 0,65 und der Molenbruch der Arsensäure zwischen 0,94 und 0,80 liegt.

24. Verfahren zur Herstellung eines Kationenaustauschers nach Anspruch 23, bei dem die Reaktion in Anwesenheit von Fluorwasserstoffsäure mit einer anfänglichen Molarität geführt wird, die annähernd das 2-10fache, vorzugsweise das 4-8fache, derjenigen des vierwertigen Metalls beträgt, wobei die Gesamtkonzentration des Gemisches der beiden Säuren zwischen 2 und 10M, vorzugsweise zwischen 4 und 6 M liegt und die Temperatur zwischen der Raumtemperatur und etwa 100°C liegt.

25. Verfahren zur Herstellung eines Kationenaustauschers nach Anspruch 15, bei dem die Gesamtkonzentration des Gemisches der Phosphor- und phosphorigen oder der Arsen- und phosphorigen Säuren zwischen 2 und 14 M liegt, wobei der Molenbruch der Phosphor- oder der Arsensäure zwischen 0,70 und 0,1 liegt.

26. Verfahren zur Herstellung eines Kationenaustauschers nach Anspruch 25, bei dem die Reaktion in Anwesenheit von Fluorwasserstoffsäure mit einer anfänglichen Molarität geführt wird, die annähernd das 2-10fache, vorzugsweise das 4-8fache, derjenigen des vierwertigen Metalls beträgt, wobei die Gesamtkonzentration des Gemisches der beiden Säuren zwischen 2 und 10 M, vorzugsweise zwischen 4 und 6 M, liegt und die Temperatur zwischen der Raumtemperatur und etwa 100°C liegt.

27. Methode zur Zwischenschaltung von polaren Molekülen, dadurch gekennzeichnet, dass dieselbe die Stufen umfasst, bei denen eine Kationenaustauscher der Formel

$$M(HAO_4)_{2-x}(HAO_3)_x \cdot nH_2O,$$

wobei M ein vierwertiges unter Zr, Ti oder Hf gewähltes Metall ist, A Phosphor oder Arsen ist, x zwischen 0,05 und 1,95 liegt und n eine ganze Zahl oder eine Bruchzahl zwischen 0 und 6 ist, in einer Lösung von polaren Molekülen suspendiert wird und die Suspension so lange umgerührt wird, bis die Zwischenschaltung stattgefunden hat.

28. Anwendung der Erzeugnisse nach Anspruch 1 bis 9 als Kationenaustauscher.

29. Anwendung der Erzeugnisse nach Anspruch 1 bis 9 als Zwischenschaltungsmittel für polare Moleküle.

30. Anwendung nach Anspruch 29 zur Zwischenschaltung von protonendurchlässige Gruppen enthaltenden polaren Molekülen.

**Patentansprüche für das Vertragsland: AT**

1. Verfahren zur Herstellung eines Kationenaustauschers mit der Formel

$$M(HAO_4)_{2-x}(HAO_3)_x \cdot nH_2O,$$

wobei M ein vierwertiges, unter Zr, Ti oder Hf gewähltes Metall ist, A Phosphor oder Arsen ist, x zwischen 0,05 und 1,95 liegt und n eine ganze Zahl oder eine Bruchzahl zwischen 0 und 6 ist, dadurch gekennzeichnet, dass dabei die Reaktion einer Verbindung eines vierwertigen Metalls mit wenigstens zwei mit Sauerstoff behandelten Phosphor- und/oder Arsensäuren vorgenommen wird.

2. Verfahren nach Anspruch 1, dadurch gekennzeichnet, dass die Reaktion in einer wässerigen Umgebung stattfindet.

3. Verfahren nach Anspruch 2, dadurch gekennzeichnet, dass die vierwertige Metallverbindung unter Halogeniden, Oxyhalogeniden, Nitraten, Sulfaten, Phosphaten und Oxyden gewählt wird.

4. Verfahren zur Herstellung eines Kationenaustauschers nach Anspruch 3, dadurch gekennzeichnet, dass nur zwei mit Sauerstoff behandelte Säuren benutzt werden.

5. Verfahren nach Anspruch 4, dadurch gekennzeichnet, dass die beiden mit Sauerstoff behandelten Säuren unter den Paaren Phosphorsäure/phosphorige Säure und Arsensäure/phosphorige Säure gewählt werden.

6. Verfahren nach Anspruch 5, dadurch gekennzeichnet, dass die Konzentration der beiden mit Sauerstoff behandelten Säuren zwischen 0,5 und 14M liegt und das Verhältnis der Gesamtsäuremole zu den Molen des vierwertigen Metalls in der Lösung wenigstens 2 beträgt.

7. Verfahren nach Anspruch 6, dadurch gekennzeichnet, dass die Reaktion zwischen der vierwertigen Metallverbindung und dem Paar Säuren bei einer Temperature von wenigstens 50°C geführt wird.

8. Verfahren nach Anspruch 6, dadurch gekennzeichnet, dass die Reaktion bei einer Temperatur zwischen 50°C und dem Siedepunkt der Lösung 1 bis 100 Stunden lang geführt wird.

9. Verfahren nach Anspruch 6, dadurch gekennzeichnet, dass die Reaktion beim Siedepunkt der Lösung unter atmosphärischem Druck 100 bis 1000 Stunden lang oder in einem Autoklav bei einer Temperatur zwischen dem Siedepunkt und 300°C 10 bis 100 Stunden lang geführt wird.

10. Verfahren nach Anspruch 6, dadurch gekennzeichnet, dass die Reaktion bei einer Temperatur zwischen der Raumtemperatur und dem Siedepunkt der Lösung 1 bis 100 Stunden lang in Anwesenheit eines Zusammensetzungsmittels für das vierwertige Metall geführt wird.

11. Verfahren nach Anspruch 10, dadurch gekennzeichnet, dass das Zusammensetzungsmittel Fluorwasserstoffsäure ist.

12. Verfahren zur Herstellung eines Kationenaustauschers nach Anspruch 9, dadurch gekennzeichnet, dass die Gesamtkonzentration des Gemisches der Phosphor- und phosphorigen oder der Arsen- und phosphorigen Säuren zwischen 2 und 14M liegt, wobei der Molenbruch der Phosphor- oder Arsensäure zwischen 0,98 und 0,75 liegt.

13. Verfahren zur Herstellung eines Kationenaustauschers nach Anspruch 12, dadurch gekennzeichnet, dass die Reaktion in Anwesenheit von Fluorwasserstoffsäure mit einer anfänglichen Molarität geführt wird, die annähernd das 2—10fache, vorzugsweise das 4—8fache, derjenigen des Zirkons beträgt, wobei die Gesamtkonzentration des Gemisches der beiden Säuren zwischen 2 und 10M, vorzugsweise zwischen 4 und 6M liegt, und die Temperatur zwischen der Raumtemperatur und etwa 100°C liegt.

14. Verfahren zur Herstellung eines Kationenaustauschers nach Anspruch 6, dadurch gekennzeichnet, dass die Gesamtkonzentration des Gemisches der Phosphor- und phosphorigen oder der Arsen- und

phosphorigen Säuren zwischen 2 und 14M liegt, wobei der Molenbruch der Phosphorsäure zwischen 0,83 und 0,65 und der Molenbruch der Arsensäure zwischen 0,94 und 0,80 liegt.

15. Verfahren zur Herstellung eines Kationenaustauschers nach Anspruch 14, dadurch gekennzeichnet, dass die Reaktion in Anwesenheit von Fluorwasserstoffsäure mit einer anfänglichen Molarität, die das 2—10fache, vorzugsweise das 4—8fache, derjenigen des vierwertigen Metalls beträgt, geführt wird, wobei die Gesamtkonzentration des Gemisches der beiden Säuren zwischen 2 und 10M, vorzugsweise zwischen 4 und 6M, liegt und die Temperatur zwischen der Raumtemperatur und etwa 100°C liegt.

16. Verfahren zur Herstellung eines Kationenaustauschers nach Anspruch 6, dadurch gekennzeichnet, dass die Gesamtkonzentration des Gemisches der Phosphor- und phosphorigen oder der Arsen- und phosphorigen Säuren zwischen 2 und 14M liegt, wobei der Molenbruch der Phosphor- oder Arsensäure zwischen 0,70 und 0,1 liegt.

17. Verfahren zur Herstellung eines Kationenaustauschers nach Anspruch 16, dadurch gekennzeichnet, dass die Reaktion in Anwesenheit von Fluorwasserstoffsäure mit einer anfänglichen Molarität geführt wird, die annähernd das 2—10fache, vorzugsweise das 4—8fache, derjenigen des vierwertigen Metalls beträgt, wobei die Gesamtkonzentration des Gemisches der beiden Säuren zwischen 2 und 10M, vorzugsweise zwischen 4 und 6M, liegt und die Temperatur zwischen der Raumtemperatur und etwa 100°C liegt.

**Revendications pour les Etats Contractants: BE, CH, DE, FR, GB, LI, LU, NL**

1. Echangeur de cations, caractérisé en ce qu'il comprend une solution solide d'un sel acide d'un métal tétravalent et d'au moins deux acides oxygénés, de structure tétraèdrique, des éléments phosphore et/ou arsenic, ledit échangeur de cations répondant encore à la formule

$$M(HAO_4)_{2-x}(HAO_3)_x \cdot nH_2O$$

dans laquelle M représente un métal tétravalent choisi parmi Zr, Ti et HF; A représente le phosphore ou l'arsenic; *x* est compris entre 0,05 et 1,95; et *n* est un nombre entier ou fractionnaire compris entre 0 et 6.

2. Echangeur de cations selon la revendication 1, dans lequel les acides oxygénés de phosphore et/ou d'arsenic ne sont qu'au nombre de deux.

3. Echangeur de cations selon la revendication 2, dans lequel les deux acides oxygénés sont choisis parmi les paires suivantes: acide phosphorique-acide phosphoreux; acide arsénique-acide phosphoreux.

4. Echangeur de cations selon la revendication 1, caractérisé en ce qu'il est amorphe et répond à la formule générale:

$$M(HAO_4)_{2-x}(HAO_3)_x \cdot nH_2O$$

dans laquelle M est un métal tétravalent, A représente le phosphore ou l'arsenic, *x* est compris entre 0,05 et 1,95 et *n* est un nombre entier ou fractionnaire compris entre 0 et 6.

5. Echangeur de cations selon la revendication 1, caractérisé en ce qu'il est semi-cristallin, de structure stratifiée, et répond à la formule générale:

$$Zr(HAO_4)_{2-x}(HPO_3)_x \cdot nH_2O$$

dans laquelle A représente le phosphore ou l'arsenic, *x* est compris entre 0,05 et 1,95 et *n* est compris entre 0 et 6, la distance entre les couches étant comprise entre 1,06 nm et 0,55 nm.

6. Echangeur de cations selon la revendication 1, caractérisé en ce qu'il est cristallin, de structure stratifiée, et répond à la formule générale:

$$Zr(HAO_4)_{2-x}(HPO_3)_x \cdot nH_2O$$

dans laquelle A représente le phosphore ou l'arsenic, *x* est compris entre 0,05 et 0,5 et *n* est compris entre 0 et 1, la distance entre les couches étant comprises entre 0,76 nm et 0,75 nm.

7. Echangeur de cations selon la revendication 1, caractérisé en ce qu'il est cristallin, de structure stratifiée 5, et répond à la formule générale:

$$Zr(HAO_4)_{2-x}(HPO_3)_x \cdot nH_2O$$

dans laquelle A représente le phosphore ou l'arsenic, *x* est compris entre 1,02 et 1,50 et *n* est compris entre 0 et 0,5, la distance entre les couches étant comprise entre 0,69 nm et 0,62 nm.

8. Echangeur de cations selon la revendication 7, caractérisé en ce qu'il est cristallin, de structur stratifiée, et répond à la formule:

$$Zr(HPO_4)_{0,66}(HPO_3)_{1,34} \cdot nH_2O$$

dans laquelle *n* est compris entre 0 et 0,3, la distance entre les couches étant de 0,655 nm±0,005 nm.

9. Echangeur de cations selon la revendication 1, caractérisé en ce qu'il est semi-cristallin, de structure stratifiée, et répond à la formule générale:

$$Zr(HAO_4)_{2-x}(HPO_3)_x \cdot nH_2O$$

dans laquelle A représente le phosphore ou l'arsenic, *x* est compris entre 1,80 et 1,95 et *n* est compris entre 0 et 0,2, la distance entre les couches étant comprise entre 0,60 nm et 0,55 nm.

10. Procédé de préparation d'un échangeur de cations répondant à la formule:

$$M(HAO_4)_{2-x}(HAO_3)_x \cdot nH_2O$$

dans laquelle M est un métal tétravalent choisi parmi Zr, Ti et Hf, A représente le phosphore ou l'arsenic, *x* compris entre 0,05 et 1,95, et *n* est un nombre entier ou fractionnaire compris entre 0 et 6, caractérisé en ce qu'il comporte la réaction d'un composé d'un métal tétravalent avec au moins deux acides oxygénés de phosphore et/ou d'arsenic.

11. Procédé selon la revendication 10, dans lequel on effectue ladite réaction en milieu aqueux.

12. Procédé selon la revendication 11, dans lequel en choisit le composé de métal tétravalent parmi les halogénures, les oxy-halogénures, les nitrates, les sulfates, les phosphates et les oxydes.

13. Procédé de préparation d'un échangeur de cations selon la revendication 12, dans lequel on n'utilise que deux acides oxygénés.

14. Procédé selon la revendication 13, dans lequel les deux acides oxygénés sont choisis parmi les paires suivantes: acide phosphorique-acide phosphoreux et acide arsénique-acide phosphoreux.

15. Procédé selon la revendication 14, dans lequel la concentration des deux acides oxygénés est comprise entre 0,5 et 14M, et le rapport du total des moles d'acide aux moles du métal tétravalent dans la solution est d'au moins 2.

16. Procédé selon la revendication 15, dans lequel on effectue la réaction entre le composé de métal tétravalent et la paire d'acides à une température inférieure à 50°C.

17. Procédé selon la revendication 15, dans lequel on effectue la réaction à une température comprise entre 50°C et le point d'ébullition de la solution, pendant une durée comprise entre 1 et 100 heures.

18. Procédé selon la revendication 15, dans lequel on effectue la réaction au point d'ébullition de la solution sous pression atmosphérique, pendant une durée comprise entre 100 et 1000 heures, ou en autoclave à une température comprise entre le point d'ébullition et 300°C, pendant une durée de 10 à 100 heures.

19. Procédé selon la revendication 15, dans lequel on effectue la réaction entre la température ambiante et le point d'ébullition de la solution, pendant une durée comprise entre 1 et 100 heures, en présence d'un agent complexant pour le métal tétravalent.

20. Procédé selon la revendication 19, dans lequel l'agent complexant est l'acide fluorhydrique.

21. Procédé de préparation d'un échangeur de cations selon la revendication 18, dans lequel la concentration totale du mélange des acides phosphorique et phosphoreux ou des acides arsénique et phosphoreux est comprise entre 2 et 14M, la fraction molaire de l'acide phosphorique ou arsénique étant comprise entre 0,98 et 0,75.

22. Procédé de préparation d'un échangeur de cations selon la revendication 21, dans lequel on effectue la réaction en présence d'acide fluorhydrique ayant une concentration molaire initiale d'environ 2 à 10 fois, de préférence 4 à 8 fois celle du zirconium, la concentration totale du mélange des deux acides étant comprise entre 2 et 10 M, de préférence entre 4 et 6M, et la température étant comprise entre la température ambiante et environ 100°C.

23. Procédé de préparation d'un échangeur de cations selon la revendication 15, dans lequel la concentration totale du mélange des acides phosphorique et phosphoreux ou des acides arsénique et phosphoreux est comprise entre 2 et 14M, la fraction molaire de l'acide phosphorique étant comprise entre 0,83 et 0,65 et la fraction molaire de l'acide arsénique étant comprise entre 0,94 et 0,80.

24. Procédé de préparation d'un échangeur de cations selon la revendication 23, dans lequel on effectue la réaction en présence d'acide fluorhydrique ayant une concentration molaire initiale de 2 à 10 fois, de préférence de 4 à 8 fois celle du métal tétravalent, la concentration totale du mélange des deux acides étant comprise entre 2 et 10M, de préférence entre 4 et 6M, et la température étant comprise entre la température ambiante et 100°C environ.

25. Procédé de préparation d'un échangeur de cations selon la revendication 15, dans lequel la concentration totale du mélange des acides phosphorique et phosphoreux ou des acides arsénique et phosphoreux est comprise entre 2 et 14M, la fraction molaire de l'acide phosphorique ou arsénique étant comprise entre 0,70 et 0,1.

26. Procédé de préparation d'un échangeur de cations selon la revendication 25, dans lequel on effectue la réaction en présence d'acide fluorhydrique ayant une concentration molaire initiale d'environ 2 à 10 fois, de préférence 4 à 8 fois celle du métal tétravalent, la concentration totale du mélange des deux acides étant comprise entre 2 et 10M, de préférence entre 4 et 6M, et la température étant comprise entre la température ambiante et 100°C environ.

27. Méthode pour intercaler des molécules polaires, caractérisée en ce qu'elle consiste à mettre en suspension un échangeur de cations de formule:

$$M(HAO_4)_{2-x}(HAO_3)_x \cdot nH_2O$$

dans laquelle M est un métal tètravalent choisi parmi Zr, Ti et Hf, A représente le phosphore ou l'arsenic, $x$ est compris entre 0,05 et 1,95 et $n$ est un nombre entier ou fractionnaire compris entre 0 et 6, dans une solution de molécules polaires et à agiter cette suspension jusqu'à formation des composés d'intercalation.

28. Utilisation des produits selon les revendications 1 à 9, comme échangeurs de cations.

29. Utilisation des produits selon les revendications 1 à 9, comme agents d'intercalation pour des molécules polaires.

30. Utilisation selon la revendication 29, pour l'intercalation de molécules polaires contenant des groupes accepteurs de protons.

**Revendications pour l'Etat Contractant: AT**

1. Procédé de préparation d'un échangeur de cations répondant à la formule:

$$M(HAO_4)_{2-x}(HAO_3)_x \cdot nH_2O$$

dans laquelle M est un métal tétravalent choisi parmi Zr, Ti et Hf, A représente le phosphore ou l'arsenic, $x$ est compris entre 0,05 et 1,95 et $n$ est un nombre entier ou fractionnaire comprise entre 0 et 6, caractérisé en ce qu'on fait réagir un composé d'un métal tétravalent avec au moins deux acides oxygénés de phosphore et/ou d'arsenic.

2. Procédé selon la revendication 1, caractérisé en ce qu'on effectue ladite réaction en milieu aqueux.

3. Procédé selon la revendication 2, caractérisé en ce qu'on choisit le composé du métal tétravalent parmi les halogénures, oxyhalogénures, nitrates, sulfates, phosphates et oxydes.

4. Procédé de préparation d'un échangeur de cations selon la revendication 3, caractérisé en ce qu'on n'utilise que deux acides oxygénés.

5. Procédé selon la revendication 4, caractérisé en ce qu'on choisit les deux acides oxygénés parmi les paires suivantes: acide phosphorique-acide phosphoreux et acide arsénique-acide phosphoreux.

6. Procédé selon la revendication 5, caractérisé en ce que la concentration des deux acides oxygénés est comprise entre 0,5 et 14M, et le rapport du total des moles d'acide aux moles du métal tétravalent dans la solution est d'au moins 2.

7. Procédé selon la revendication 6, caractérisé en ce qu'on effectue la réaction entre le composé de métal tétravalent et la paire d'acides à une température inférieure à 50°C.

8. Procédé selon la revendication 6, caractérisé en ce qu'on effectue la réaction à une température comprise entre 50°C et le point d'ébullition de la solution, pendant une durée comprise entre 1 et 100 heures.

9. Procédé selon la revendcation 6, caractérisé en ce qu'on effectue la réaction au point d'ébullition de la solution sous pression atmosphérique, pendant une durée comprise entre 100 et 1000 heures, ou en autoclave à une température comprise entre le point d'ébullition et 300°C, pendant une durée de 10 à 100 heures.

10. Procédé selon la revendication 6, caractérisé en ce qu'on effectue la réaction à une température comprise entre la température ambiante et le point d'ébullition de la solution, pendant une durée comprise entre 1 et 100 heures, en présence d'un agent complexant pour le métal tétravalent.

11. Procédé selon la revendication 10, caractérisé en ce que l'agent complexant est l'acide fluorhydrique.

12. Procédé de préparation d'un échangeur de cations selon la revendication 9, caractérisé en ce que la concentration totale du mélange des acides phosphorique et phosphoreux ou des acides arsénique et phosphoreux est comprise entre 2 et 14M, la fraction molaire de l'acide phosphorique ou arsénique étant comprise entre 0,98 et 0,75.

13. Procédé de préparation d'un échangeur de cations selon la revendication 12, caractérisé en ce qu'on effectue la réaction en présence d'acide fluorhydrique ayant une concentration molaire initiale d'environ 2 à 10 fois, de préférence de 4 à 8 fois celle du zirconium, la concentration totale du mélange des deux acides étant comprise entre 2 et 10M, de préférence entre 4 et 6M, et la température étant comprise entre la température ambiante et environ 100°C.

14. Procédé de préparation d'un échangeur de cations selon la revendicaton 6, caractérisé en ce que la concentration totale du mélange des acides phosphorique et phosphoreux ou des acides arsénique et phosphoreux est comprise entre 2 et 14M, la fraction molaire de l'acide phosphorique étant comprise entre 0,83 et 0,65, et la fraction molaire de l'acide arsénique étant comprise entre 0,94 et 0,80.

15. Procédé de préparation d'un échangeur de cations selon la revendication 14, caractérisé en ce qu'on effectue la réaction en présence d'acide fluorhydrique ayant une concentration molaire initiale de 2 à 10 fois, de préférence de 4 à 8 fois celle du métal tétravalent, la concentration totale du mélange des deux

acides étant comprise entre 2 et 10M, de préférence entre 4 et 6M, et la température étant comprise entre la température ambiante et environ 100°C.

16. Procédé de préparation d'un échangeur de cations selon la revendication 6, caractérisé en ce que la concentration totale du mélange des acides phosphorique et phosphoreux ou des acides arsénique et phosphoreux est comprise entre 2 et 14M, la fraction molaire de l'acide phosphorique ou de l'acide arsénique étant comprise entre 0,70 et 0,1.

17. Procédé de préparation d'un échangeur de cations selon la revendication 16, caractérisé en ce qu'on effectue la réaction en présence d'acide fluorhydrique ayant une concentration molaire initiale d'environ 2 à 10 fois, de préférence 4 à 8 fois celle du métal tétravalent, la concentration totale du mélange des deux acides étant comprise entre 2 et 10M, de préférence entre 4 et 6M, et la température étant comprise entre la température ambiante et environ 100°C.

Fig.1A

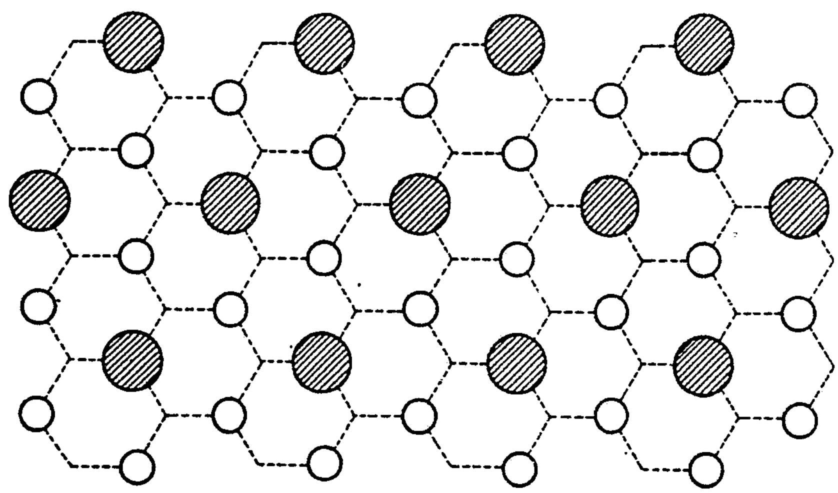

Fig.1B

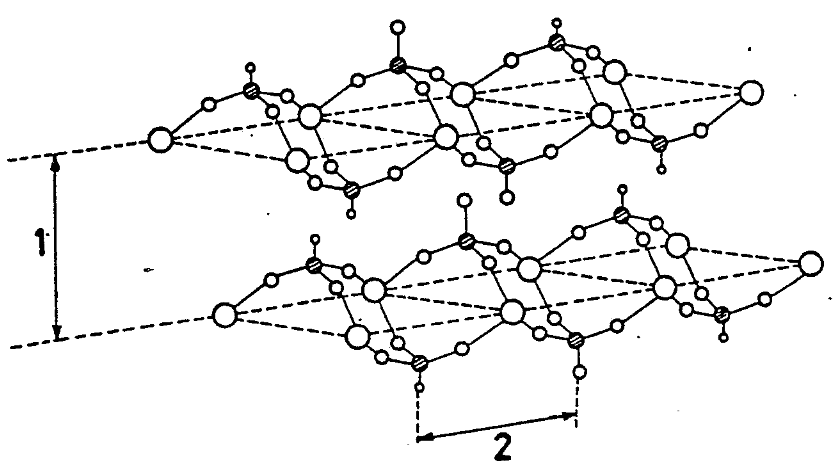

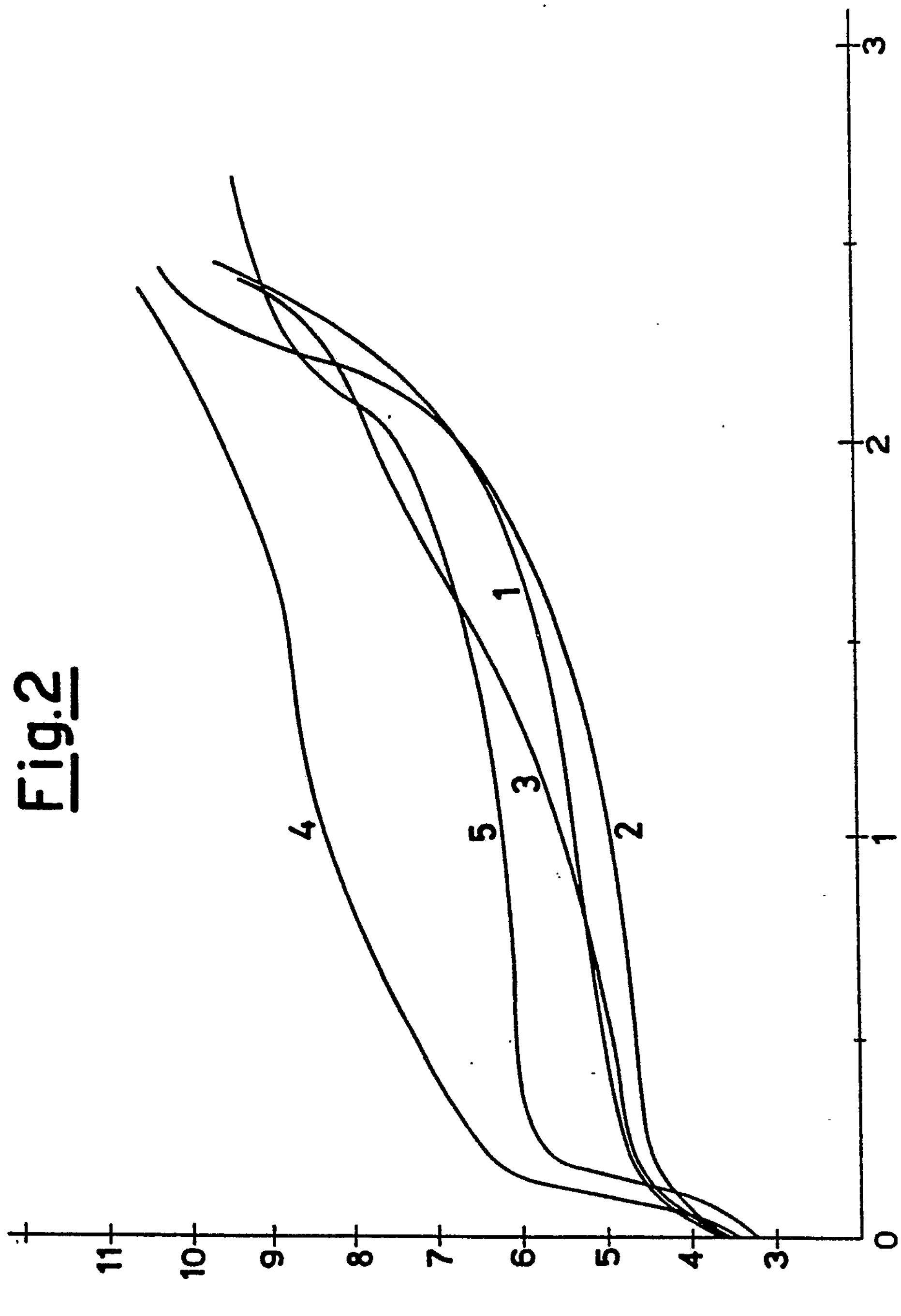


Fig.2

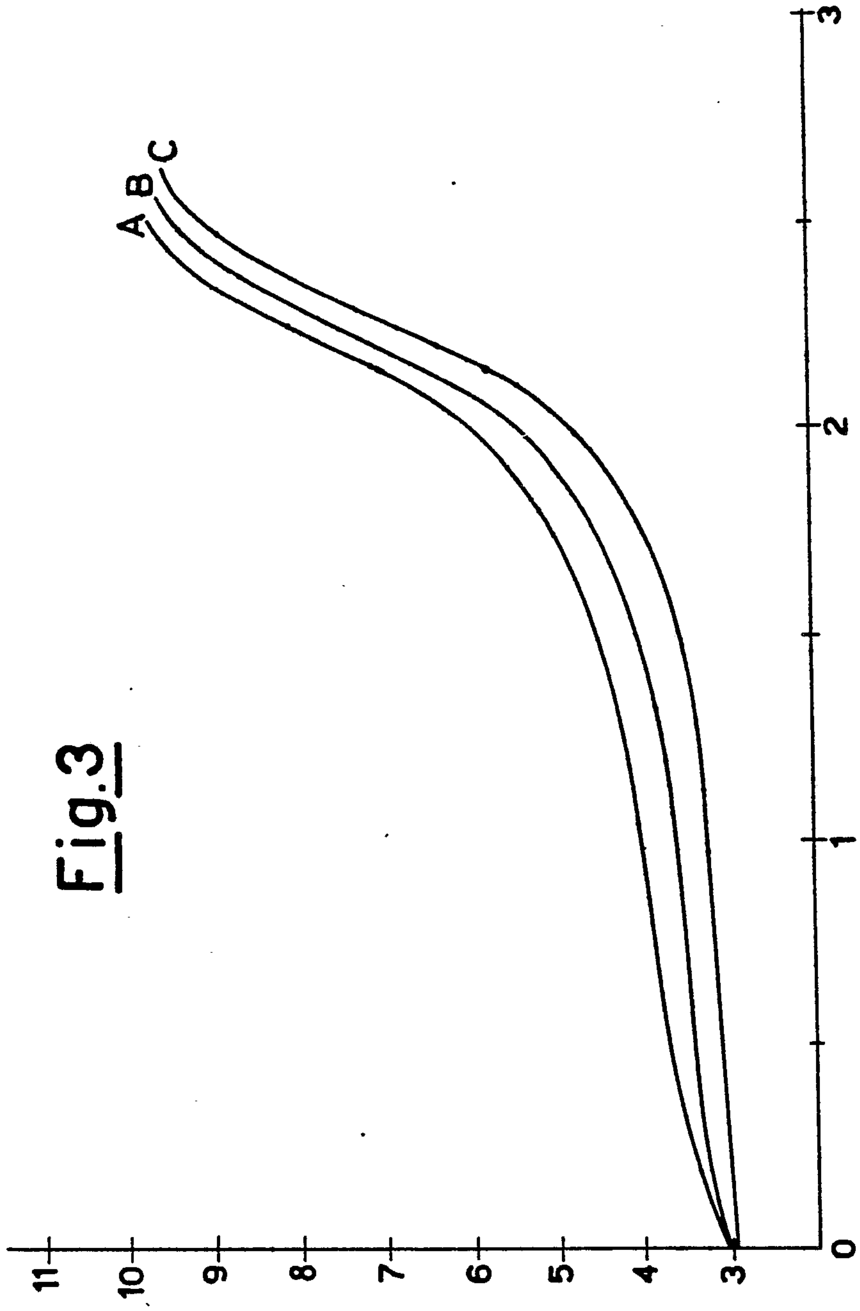


Fig.3